# EUROPÄISCHE PATENTSCHRIFT

(11) **EP 2 219 814 B1**
(45) Veröffentlichungstag und Bekanntmachung des Hinweises auf die Patenterteilung: **17.12.2014**
(21) Anmeldenummer: 08850933.6
(22) Anmeldetag: 31.10.2008
(51) Int. Cl.: B23K 20/12

(54) **REIBRÜHRSCHWEIßWERKZEUG**
FRICTION STIR WELDING TOOL
OUTIL DE SOUDAGE PAR FRICTION MALAXAGE

(30) Priorität: 16.11.2007 AT 18622007
(43) Veröffentlichungstag der Anmeldung: 25.08.2010
(73) Patentinhaber: BOEHLERIT GmbH & Co.KG., 8605 Kapfenberg (AT)
(72) Erfinder: KOLBECK, Christian, A-8605 Kapfenberg (AT); PITONAK, Reinhard, A-8600 Bruck an der Mur (AT); WEISSENBACHER, Ronald, A-8600 Bruck an der Mur (AT)
(74) Vertreter: Wirnsberger, Gernot
(86) Internationale Anmeldenummer: PCT/AT2008/000395
(87) Internationale Veröffentlichungsnummer: WO 2009/062216

(56) Entgegenhaltungen:
- WO-A-99/52669
- WO-A-2005/113173
- US-A1- 2007 119 276

## Beschreibung

Die Erfindung betrifft ein Reibrührschweißwerkzeug gemäß dem Oberbegriff des Anspruchs 1.

Die WO 2005/113173 A1 beschreibt ein Reibrührschweißwerkzeug mit einem zylindrischen Schaft und einem vorragenden Stift geringeren Durchmessers.

Reibrührschweißen ist ein seit etwa zwei Jahrzehnten bekanntes Schweißverfahren, bei dem ein Werkzeug der eingangs genannten Art mit dem stiftseitigen Ende an zu verbindende Werkstücke angestellt und in Rotation versetzt wird. Durch die Rotation des Stiftes und des angrenzenden Schulterbereiches bzw. die dadurch entstehende Reibungswärme werden die Materialien der zu verbindenden Werkstücke erwärmt und teigig gemacht. Sobald die Materialien der zu verbindenden Werkstücke genügend teigig sind, sorgt der Stift für eine innige Durchmischung der Materialien der zu verbindenden Werkstücke im Verbindungsbereich. Sodann, wenn die Werkstücke im Bereich der Eingriffszone des Stiftes abkühlen gelassen werden, entsteht eine im Vergleich mit konventionellen Schweißverfahren verbesserte Schweißstelle, die insbesondere frei von Poren und/oder unerwünschten Gefügeausbildungen sein kann.

Wiewohl noch eine junge technologische Entwicklung, wird Reibrührschweißen bereits in vielen Anwendungsgebieten eingesetzt, vor allem zum Schweißen von Werkstücken aus niedrig schmelzenden Materialien, beispielsweise Aluminiumlegierungen.

In jüngerer Zeit wird auch versucht, die mit einem Reibrührschweißen erzielten Vorteile beim Schweißen von höher schmelzenden Materialien, beispielsweise Stahl, fruchtbar zu machen. Ein Problem besteht allerdings bislang darin, dass sich die eingesetzten Reibrührschweißwerkzeuge bei den hohen Schweißtemperaturen oftmals verformen. Des Weiteren kann im Schweißprozess auch ein Ablösen bzw. Abbrechen des Stiftes bzw. Pins vom Schaft auftreten oder der Schaft selbst brechen.

Aufgabe der Erfindung ist es, ein verbessertes Reibrührschweißwerkzeug zum Schweißen von Stahl anzugeben.

Diese Aufgabe wird bei einem Reibrührschweißwerkzeug der eingangs genannten Art gelöst, wenn das Reibrührschweißwerkzeug zumindest im Bereich des Stiftes und im

Schulterbereich aus einem Hartmetall enthaltend 80 Gewichtsprozent bis 98 Gewichtsprozent Wolframcarbid mit einer durchschnittlichen Korngröße von mehr als 1 µm und bis zu 20 Gewichtsprozent Cobalt sowie optional in Summe bis zu 18 Gewichtsprozent Titancarbid, Tantalcarbid, Niobcarbid und/oder Mischcarbide davon gebildet ist und zumindest in einem der genannten Bereiche eine Beschichtung aus einer oder mehreren Lagen aufweist, wobei insbesondere zumindest eine Lage vorzugsweise überwiegend aus Aluminiumtitannitrid oder Aluminiumchromnitrid gebildet ist.

Die mit der Erfindung erzielten Vorteile sind insbesondere darin zu sehen, dass aufgrund der vorgesehenen Gewichtsanteile von Wolframcarbid bzw. Cobalt das Reibrührschweißwerkzeug ein Substrat aufweist, das einerseits wenig anfällig mit Bezug auf Brüche ist, andererseits aber auch nicht so weich ist, dass es im Einsatz bzw. Gebrauch zu Verformungen des Werkzeuges kommen würde. Im Zusammenhang damit scheint auch eine vorgesehene durchschnittliche Korngröße des Wolframcarbids im gesinterten Werkzeugrohling von mehr als 2 µm wesentlich zu sein. Wie Untersuchungen gezeigt haben, führen interessanterweise kleinere durchschnittliche Korngrößen nicht zum gewünschten Ergebnis. Vermutet wird, dass bei feinerem Korn die erforderliche Wärmeleitfähigkeit des Schaftes zu gering ist. Im Vergleich mit bekannten Lösungen auf Wolfram/Rhenium-Basis ist ein weiterer Vorteil darin zu sehen, dass bei einem erfindungsgemäßen Reibrührschweißwerkzeug eine Aufklebeneigung der zu schweißenden Materialien, beispielsweise Stahl, nicht oder nur im verringerten Ausmaß beobachtet wurde.

Im Zusammenhang mit dem harten, aber dennoch zähen Substrat sorgt die vorgesehene Beschichtung für eine lange Gebrauchsdauer des Reibrührschweißwerkzeuges beim Schweißen von Stahl. Diesbezüglich wird vermutet, dass die vorgesehenen Lagen beispielsweise aus Aluminiumtitannitrid bzw. Aluminiumchromnitrid vor allem im Bereich der Schulterkante als Hitzebarrieren und insbesondere im anschließenden Schulterbereich als Verschleißschutz dienen und somit sowohl einer unerwünschten Erwärmung und Verformung des Reibrührschweißwerkzeuges als auch einem Verschleiß entgegenwirken. Um bei hoher Härte eine Bruchanfälligkeit gering zu halten und gleichzeitig eine Verformung des Reibrührschweißwerkzeuges im Gebrauch möglichst zu vermeiden, kann zweckmäßigerweise vorgesehen sein, dass das Hartmetall 2 Gewichtsprozent bis 15 Gewichtsprozent Cobalt enthält.

Günstig ist es des Weiteren, wenn das Hartmetall aus Wolframcarbid und 2 Gewichtsprozent bis 12 Gewichtsprozent, vorzugsweise 3 Gewichtsprozent bis 9 Gewichtsprozent, Cobalt besteht, und zwar aus den vorgenannten Gründen. Besonders günstig ist es, den Cobaltgehalt auf maximal 9 Gewichtsprozent einzuschränken, da Cobalt bei Temperaturen von mehr als 1000 °C durch Diffusion in die Beschichtung zu deren Zerstörung beitragen kann, was durch höhere Cobaltgehalte gefördert wird. Ein Mindestgehalt an Cobalt ist für eine gewünschte Zähigkeit erforderlich, wobei sich im Zusammenhang ein Ausschluss von weiteren Carbiden (abgesehen von herstellungsbedingten Verunreinigungen) wie Titancarbid und/oder Tantalcarbid und/oder Niobcarbid sowie Mischcarbiden empfiehlt, da diese versprödend wirken können.

Besonders bevorzugt mit Bezug auf eine Gebrauchsdauer des Werkzeuges ist es, wenn eine durchschnittliche Korngröße des Wolframcarbids möglichst groß ist und mehr als 2,5 um, insbesondere 2,5 µm bis 8,5 µm, beträgt.

Zur Herstellung der vorgesehenen Beschichtung können sowohl CVD-Verfahren als auch PVD-Verfahren zur Anwendung kommen. Bewährt hat es sich, die Beschichtung durch ein PVD-Verfahren herzustellen. Der Grund hierfür liegt darin, dass mit gängigen Beschichtungsapparaturen bei einem CVD-Verfahren eine teilweise Beschichtung des Reibrührschweißwerkzeuges nicht möglich ist. Hingegen kann mit einem PVD-Verfahren ein teilweises Beschichten erfolgen, insbesondere nur im Bereich des Stiftes, im Schulterbereich sowie allenfalls über eine Länge von ca. 10 mm in jenem Bereich des Schaftes, der an den Schulterbereich anschließt. Diese teilweise Beschichtung ist insofern erwünscht, als dass der Schaft grundsätzlich gut Wärme abgeben können soll und lediglich in jenem Bereich, in dem er höchsten Temperaturen ausgesetzt ist, also im Bereich des Stiftes, der Schulter und des daran anschließenden Bereiches des Schaftes, mit einer als Hitzebarriere und Verschleißschutz dienenden Beschichtung bzw. Beschichtungslage versehen sein soll.

Als Beschichtungen kommen vorzugsweise solche aus oder mit zumindest einer Lage, die überwiegend Aluminiumtitannitrid oder Aluminiumchromnitrid enthält, zum Einsatz. Bei einer solchen Lage ist ein Anteil an Aluminiumnitrid größer als ein Anteil an Titannitrid bzw. Chromnitrid. Je nach Typ der Lage kann diese weitere Phasen aufweisen.

Um die notwendige Hitzebeständigkeit und Verschleißfestigkeit zu gewährleisten, wird die Beschichtung mit einer Schichtdicke der überwiegend Aluminiumtitannitrid oder Aluminiumchromnitrid enthaltenden Lage von 0,5 µm bis 8 µm ausgeführt

Unter den Beschichtungen erweisen sich nanostrukturierte Beschichtungen mit zumindest einer Lage aus Aluminiumtitannitrid und Siliciumnitrid oder Aluminiumchromnitrid und Siliciumnitrid als besonders bevorzugt. Solche Beschichtungen sind an sich bekannt und können ein poriges Netzwerk von α-Si₃N₄ mit einer Wandstärke des Netzwerkes von weniger als 2 Nanometer aufweisen. In den Poren ist Aluminiumtitannitrid und/oder Aluminiumchromnitrid mit einer Korngröße von weniger als 20 Nanometer verteilt.

Besonders bevorzugt ist es, im Hinblick auf eine lange Gebrauchsdauer des Reibrührschweißwerkzeuges, wenn die äußerste Lage der Beschichtung eine Lage ist, die überwiegend Aluminiumtitannitrid oder Aluminiumchromnitrid enthält.

Die geometische Ausführung des Reibrührschweißwerkzeuges kann ähnlich dem Stand der Technik erfolgen, wobei sich gezeigt hat, dass eine besonders lange Gebrauchsdauer gegeben sein kann, wenn der Stift im Wesentlichen zylinderförmig ausgebildet ist. Dabei ist der Stift zweckmäßigerweise auf einer Achse des Schaftes angeordnet.

Weitere Merkmale, Vorteile und Wirkungen der Erfindung ergeben sich aus den nachfolgend dargestellten Ausführungsbeispielen und den Zeichnungen, auf welche Bezug genommen wird. Dabei zeigen:
Fig. 1 ein Reibrührschweißwerkzeug mit einem im Wesentlichen zylindrischen Stift;
Fig. 2 eine vergrößerte Darstellung des Schnittes entlang der Schnittlinie II-II in Fig. 1;
Fig. 3 einen Teil des Schaftes des Reibrührschweißwerkzeuges gemäß Fig. 1;
Fig. 4 ein Reibrührschweißwerkzeug mit einem nicht zylindrischen Stift;
Fig. 5 eine vergrößerte Darstellung des Schnittes entlang der Schnittlinie V-V in Fig. 4;
Fig. 6 eine vergrößerte Darstellung einer Draufsicht auf ein Reibrührschweißwerkzeug gemäß Fig. 4;
Fig. 7 eine vergrößerte Darstellung des Schnittes entlang der Schnittlinie VII-VII in Fig. 6.

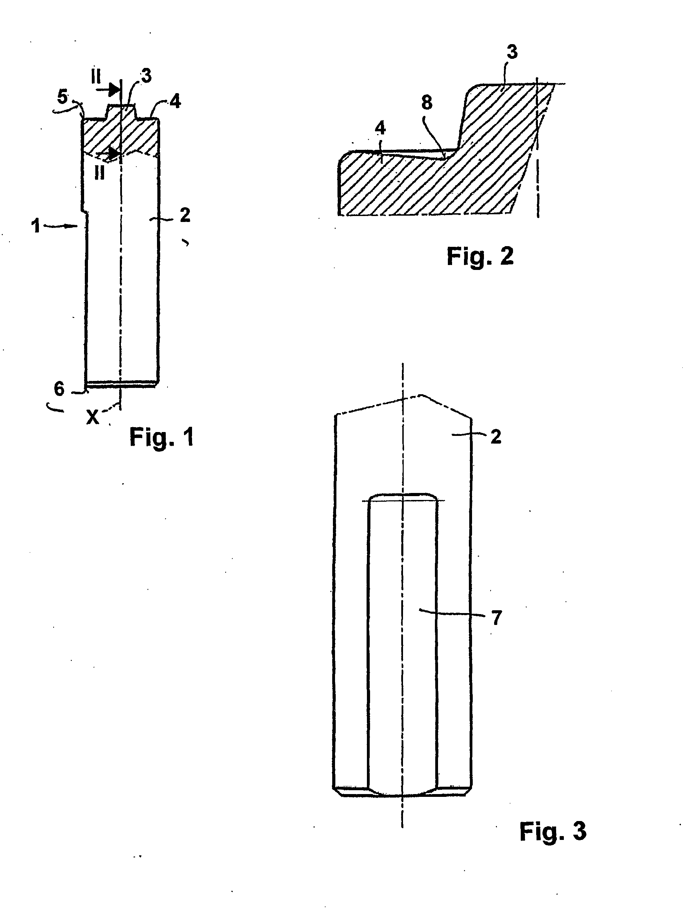

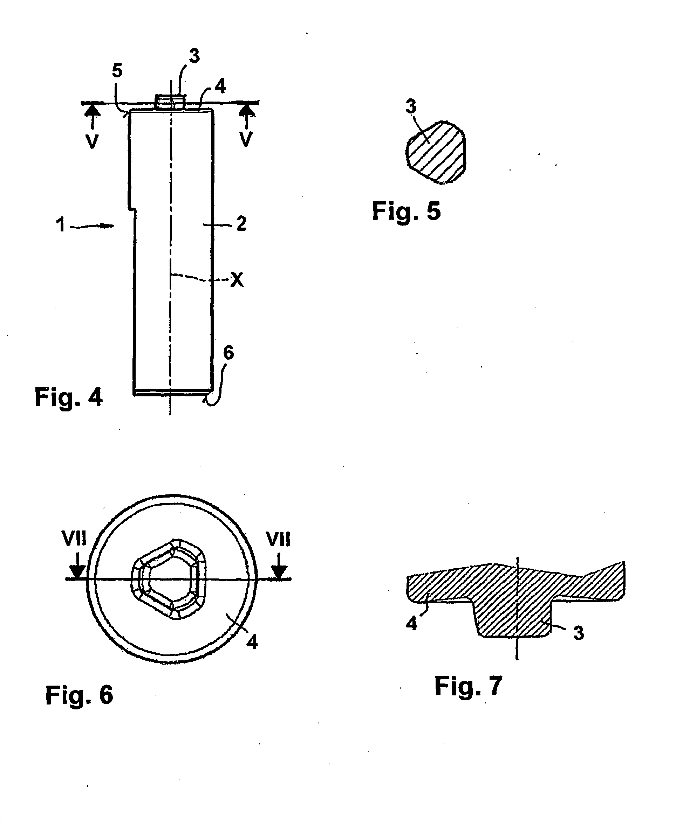

In Fig. 1 bis Fig. 3 sowie in Fig. 4 bis Fig. 7 sind zwei Reibrührschweißwerkzeuge 1 gezeigt, wie sie im Rahmen der Erfindung eingesetzt werden können. Jedes Reibrührschweißwerkzeug 1 weist einen etwa zylindrischen Schaft 2 mit zwei Enden 5, 6 auf. Das erste Ende 5 ist jeweils mit einem vom Rand bzw. einer Schulterkante zur Achse X des Schaftes 2 hin zuerst in einem Winkel von bis zu 15° abfallend verlaufenden Schulterbereich 4 ausgebildet, welcher dann ansteigend jeweils in einen auf der zentralen Achse X des Schaftes 2 angeordneten vorragenden Stift 3 bzw. Pin übergeht. Der Übergang 8 vom Schulterbereich 4 zum Stift 3 kann dabei, wie aus Fig. 2 ersichtlich, gerundet ausgebildet sein. Der Stift 3 ist vom Zentrum des Schaftes 2 in Richtung der Achse X betrachtet mit einem Winkel von etwa 5° bis 15°, vorzugsweise 7° bis 12°, geringfügig konisch zulaufend ausgebildet. Am Schaft 2 kann des Weiteren vom zweiten Ende 6 ausgehend eine Führungsnut 7 vorgesehen sein, um ein Anbringen und festes Halten des Reibrührschweißwerkzeuges 1 in einer Vorrichtung zu ermöglichen.

Die in Fig. 1 bis Fig. 3 bzw. Fig. 4 bis Fig. 7 dargestellten Reibrührschweißwerkzeuge 1 können jeweils insgesamt aus einem Hartmetall gefertigt sein, welches zumindest im Bereich des Stiftes 3, im Schulterbereich 4 sowie im an den Schulterbereich 4 anschließenden seitlichen Bereich des Schaftes 2 (bis zu ca. 10 mm) beschichtet ist. Die Reibrührschweißwerkzeuge 1 können jedoch auch zweiteilig ausgebildet sein, wobei ein erster Teil, der den Stift 3, den Schulterbereich 4 sowie einen ersten Bereich des Schaftes 2 mit einer Länge von ca. 10 mm umfasst, aus Hartmetall und ein zweiter Teil, der den Rest des Schaftes 2 bis zu seinem zweiten Ende 6 hin umfasst, aus Stahl gebildet ist. Ein Verbinden der beiden Teile kann beispielsweise durch Verschrauben oder stoffschlüssiges Verbinden erfolgen.

Reibrührschweißwerkzeuge 1, wie in Fig. 1 bis Fig. 3 dargestellt, wurden aus verschiedenen Hartmetallen auf Wolframcarbid-Basis hergestellt. Die Zusammensetzungen, Vickers-Härten HV30, die durchschnittlichen Korngrößen der bei der Herstellung der Werkzeuge durch Sintern eingesetzten Wolframcarbidpulver, also die sogenannten Fisher-Korngrößen, sowie die Dichten der Hartmetalle sind in der nachstehenden Tabelle 1 angegeben. Im Vergleich mit den Fisher-Korngrößen sind die nach einem Sintern erhaltenen Korngrößen deutlich kleiner und liegen beispielsweise bei einer durchschnittlichen Fisher-Korngröße von 9,5 µm im Bereich vom 2,5 µm bis 3,0 µm.

**Tabelle 1**

| Substrat | Zusammensetzung (in Gewichtsprozent) | | | | HV30 | Korngröße WC (µm) | Dichte (g/cm³) |
|---|---|---|---|---|---|---|---|
| | WC | Co | TiC | Ta(Nb)C | | | |
| A | 57,5 | 9,5 | 18,0 | 15,0 | 1575 | 2,5 | 10,30 |
| B | 92,0 | 8,0 | | | 1275 | 9,5 | 14,75 |
| C | 90,0 | 10,0 | | | 1675 | 0,8 | 14,40 |
| D | 87,0 | 13,0 | | | 1150 | 9,5 | 14,20 |
| E | 77,0 | 11,0 | 4,0 | 8,0 | 1400 | 5,3 | 13,15 |
| F | 73,7 | 26,0 | 0,2 | 0,2 | 838 | 9,5 | 13,10 |

Für ein Beschichten der Reibrührschweißwerkzeuge 1 gemäß Tabelle 1 wurden die in der nachfolgenden Tabelle 2 angegebenen Beschichtungstypen eingesetzt. Dabei kamen sowohl einlagige Beschichtungen (Beschichtungen Nr. 1 und Nr. 9) als auch mehrlagige Beschichtungen (beispielsweise Beschichtung Nr. 4) zum Einsatz. Eine Dicke bzw. Stärke der einzelnen Lagen bei mehrlagigen Beschichtungen ist ebenso wie die Abfolge der einzelnen Lagen aus Tabelle 2 ersichtlich.

**Tabelle 2**

| Beschichtung | Zusammensetzung | Gesamtschichtdicke (µm) |
|---|---|---|
| Nr. 1 | AlTiSiN (3,0 µm) | 3,0 |
| Nr. 2 | TiCN* (7,5 µm) | 8,0 |
| | TiN (0,5 µm) | |
| | Substrat | |
| Nr. 3 | TiN/AlCrN (3,0 µm) | 3,0 |
| Nr. 4 | TiAlN (2,0 µm) | 5,0 |
| | TiN/TiAlN (3,0 µm) | |
| | Substrat | |
| Nr. 5 | Al₂O₃ (0,5 µm) | 16,0 |
| | TiN (0,5 µm) | |
| | TiCN (1,5 µm) | |
| | Al₂O₃ (4,0 µm) | |
| | TiCN* (7,0 µm) | |
| | TiCN (2,0 µm) | |
| | TiN (0,5 µm) | |
| | Substrat | |
| Nr. 6 | Al₂O₃ (7.0µm) | 19,0 |
| | TiCN* (8,0 µm) | |
| | TiCN (3,0 µm) | |
| | TiN (1,0 µm) | |
| | Substrat | |
| Nr. 7 | AlCrN (2,0 µm) | 7,0 |
| | TiAlN (2,0 µm) | |
| | TiN/TiAlN (3,0 µm) | |
| | Substrat | |
| Nr. 8 | AlCrN (2,0 µm) | 10,0 |
| | TiCN* (7,5 µm) | |
| | TiN (0,5 µm) | |
| | Substrat | |
| Nr. 9 | AlTiN (6,0 µm) | 6,0 |

| | | |
|---|---|---|
| *hergestellt gemäß WO 2007/056785 A1 | | |

In einer ersten Versuchsreihe wurden verschiedene Reibrührschweißwerkzeuge 1 mit Zusammensetzungen bzw. Eigenschaften gemäß Tabelle 1 im Bereich des Stiftes 3, des Schulterbereiches 4 und, ausgehend vom Schulterbereich 4 bzw. einem Ende 5, auf einer Länge von ca. 10 mm am Schaft 2 beschichtet, wobei einzelne Beschichtungen mit einzelnen Substraten A, B und C zu einer Versuchsmatrix kombiniert wurden. Die so hergestellten Reibrührschweißwerkzeuge 1 wurden anschließend zum Schweißen von Werkstücken aus Stahl eingesetzt, wobei eine Schweißnahtlänge 20 mm betrug. Im Anschluss an das Schweißen wurden die einzelnen Reibrührschweißwerkzeuge 1 optisch und metallurgisch untersucht.

In Tabelle 3 sind die Ergebnisse der Versuchsmatrix zusammengefasst. Wie aus dieser Tabelle ersichtlich, kam es bei Reibrührschweißwerkzeugen 1 mit einem Substrat A in drei Fällen zu einem Bruch des Schaftes 2. War keine Beschichtung vorgesehen, so traten ausgehend vom Schulterbereich 4 Längsrisse am Schaft 2 auf. Für Reibrührschweißwerkzeuge 1 aus einem Substrat C konnte im Fall ohne Beschichtung bzw. einer Beschichtung Nr. 1 lediglich eine Punktschweißung durchgeführt werden, da eine massive Verformung der Schulterkante auftrat. Für die Varianten, bei denen ein Substrat C mit einer Beschichtung Nr. 2, Nr. 3 oder Nr. 4 kombiniert wurde, konnte bei einer Schweißnahtlänge von 20 mm ein massiver Verschleiß des Stiftes 3 und/oder eine Verformung des Schulterbereiches 4 bzw. der Schulterkante des Schaftes 2 bzw. ein Abbrechen des Stiftes 3 (Pin-Bruch) festgestellt werden. Hingegen waren Reibrührschweißwerkzeuge 1 aus einem Substrat B, beschichtet mit einer Beschichtung Nr. 2, Nr. 5, Nr. 6, Nr. 7 oder Nr. 8, auch nach dem Schweißvorgang im Wesentlichen intakt, d. h., es war weder eine wesentliche Verformung noch eine Abnutzung bzw. ein Verschleiß des Stiftes 3 bzw. Pins feststellbar.

**Tabelle 3**

| Substrat | Beschichtung | | | | | | | | |
|---|---|---|---|---|---|---|---|---|---|
| | keine | Nr.1 | Nr. 2 | Nr. 3 | Nr. 4 | Nr. 5 | Nr. 6 | Nr. 7 | Nr. 8 |
| A | Längsrisse | Schaft-Bruch | Schaft-Bruch | | | Schaft-Bruch | | | |
| B | intakt, geringe VF⁺ | | intakt | | | intakt, geringe VS⁺⁺ | intakt | intakt | intakt |
| C | VF^{+*} | VF^{+*} | VS⁺⁺, VF⁺ | Pin-Bruch | VS⁺⁺, VF⁺ | | | | |

| | | | | | | | | | |
|---|---|---|---|---|---|---|---|---|---|
| ⁺ VF... Verformung ⁺⁺ VS... Verschleiß * nur Punktschweißung | | | | | | | | | |

In einer weiteren Versuchsreihe wurden neben dem Substrat B weitere Substrate D, E und F wiederum mit verschiedenen Beschichtungen kombiniert. Entsprechende Reibrührschweißwerkzeuge 1 wurden eingesetzt, um Stahlteile über eine Schweißnahtlänge von 150 mm miteinander zu verbinden. Die Reibrührschweißwerkzeuge 1 wurden wie in der ersten Versuchsreihe optisch und metallurgisch untersucht. Die Ergebnisse sind in der nachfolgenden Tabelle 4 dargestellt.

**Tabelle 4**

| Substrat | Beschichtung | | | |
|---|---|---|---|---|
| | Nr. 1 | Nr. 9 | Nr. 7 | Nr. 2 |
| B | intakt | intakt | intakt | Pin-Bruch (bei ca. 85mm) |
| D | intakt | Pin-Bruch (bei ca. 85 mm) | Pin-Bruch (bei ca. 145 mm) | Pin-Bruch (bei ca. 25 mm) |
| E | VF⁺, VS⁺⁺ | VF⁺, VS⁺⁺ | intakt | Pin-Bruch (bei ca. 48 mm) |
| F | VF⁺, Abbruch bei 20 mm | VF⁺, Abbruch bei 20 mm | VF⁺, Abbruch bei 20 mm | |

| | | | | |
|---|---|---|---|---|
| ⁺VF...Verformung ⁺⁺ VS...Verschleiß | | | | |

Wie anhand der Tabellen ersichtlich, ist es zweckmäßig, um Schweißnähte großer Länge erstellen zu können, dass einerseits das Substrat im Wesentlichen aus ca. 2 Gewichtsprozent bis 15 Gewichtsprozent Cobalt und andererseits Wolframcarbid mit einer Korngröße von vorzugsweise mehr als 2,0 µm (im gesinterten Zustand) erstellt ist und insbesondere eine hitzebeständige und verschleißfeste Beschichtung mit zumindest einer Lage enthaltend AlTiN, AlCrN oder dotierte Varianten davon, z. B. AlTiSiN, vorgesehen ist, also Lagen, in welchen ein Anteil an Aluminiumnitrid einen Anteil an Titannitrid bzw. Chromnitrid übersteigt (im Unterschied zu z. B. TiAlN). So konnte für die Kombinationen der Beschichtungen Nr. 1, Nr. 9 und Nr. 7 mit den Substraten B und D festgestellt werden, dass bei einer Schweißnahtlänge von 150 mm Reibrührschweißwerkzeuge 1 auf Basis eines der Substrate B und D jeweils mit einer Beschichtung Nr. 1 intakt sind. Hingegen kam es bei Kombination der gleichen Substrate mit den Beschichtungen Nr. 7 bzw. Nr. 9 im Falle des Substrates D bei 145 mm bzw. 85 mm zu einem Pin-Bruch. Aufgrund der letzten Beobachtung wird vermutet, dass sich der im Vergleich der Substrate B und D abgesenkte Cobaltgehalt des Substrates B günstig auswirkt.

In einer weiteren Versuchsreihe wurden Reibrührschweißwerkzeuge 1 aus dem Substrat B mit bis zu 10 µm dicken nanostrukturierten PVD-Beschichtungen aus Aluminiumchromnitrid und Siliciumnitrid versehen und gegenüber handelsüblichen Werkzeugen auf Wolfram/Rhenium-Basis getestet. Während Werkzeuge aus dem Substrat B mit den erwähnten Beschichtungen beim Schweißen von Stahlblechen mit einer Dicke von jeweils 4 mm bei einer Gesamtschweißlänge von 550 mm kaum Verschleißerscheinungen zeigten und auch keine oder nur geringe Aufklebungen beobachtet werden konnten, waren an den handelsüblichen Werkzeugen sowohl deutliche Verschleißerscheinungen als auch Aufklebungen feststellbar. Mit Bezug auf die Schweißnähte konnte bei Einsatz erfindungsgemäßer Werkzeuge eine exzellente Qualität festgestellt werden.

## Patentansprüche

1. Reibrührschweißwerkzeug (1) mit einem im Wesentlichen zylindrischen Schaft (2), der an einem Ende (5) von einem Schulterbereich (4) des Schaftes (2) ausgehend einen vorragenden Stift (3) geringeren Durchmessers aufweist, wobei das Reibrührschweißwerkzeug (1) zumindest im Bereich des Stiftes (3) und im Schulterbereich (4) aus einem Hartmetall enthaltend 80 Gewichtsprozent bis 98 Gewichtsprozent Wolframcarbid aufweist, **dadurch gekennzeichnet, dass** das Wolframcarbid mit einer durchschnittlichen Korngröße von mehr als 2 µm und bis zu 20 Gewichtsprozent Cobalt sowie optional in Summe bis zu 18 Gewichtsprozent Titancarbid, Tantalcarbid, Niobcarbid und/oder Mischcarbide davon gebildet ist und das Reibrührschweißwerkzeug (1) zumindest in einem der genannten Bereiche eine Beschichtung aus einer oder mehreren Lagen aufweist.

2. Reibrührschweißwerkzeug (1) nach Anspruch 1, **dadurch gekennzeichnet, dass** das Hartmetall 2 Gewichtsprozent bis 15 Gewichtsprozent Cobalt enthält.

3. Reibrührschweißwerkzeug (1) nach Anspruch 1 oder 2, **dadurch gekennzeichnet, dass** das Hartmetall aus Wolframcarbid und 2 Gewichtsprozent bis 12 Gewichtsprozent, vorzugsweise 3 Gewichtsprozent bis 9 Gewichtsprozent, Cobalt besteht.

4. Reibrührschweißwerkzeug (1) nach einem der Ansprüche 1 bis 3, **dadurch gekennzeichnet, dass** die durchschnittliche Korngröße des Wolframcarbids mehr als 2,5 µm, insbesondere 2,5 µm bis 8,5 µm, beträgt.

5. Reibrührschweißwerkzeug (1) nach einem der Ansprüche 1 bis 4, **dadurch gekennzeichnet, dass** die Beschichtung eine PVD-Beschichtung ist.

6. Reibrührschweißwerkzeug (1) nach einem der Ansprüche 1 bis 5, **dadurch gekennzeichnet, dass** die Beschichtung zumindest eine Lage aufweist, die überwiegend Aluminiumtitannitrid oder Aluminiumchromnitrid enthält.

7. Reibrührschweißwerkzeug (1) nach Anspruch 6, **dadurch gekennzeichnet, dass** eine Schichtdicke der überwiegend Aluminiumtitannitrid oder Aluminiumchromnitrid enthaltenden Lage 0,5 µm bis 8 µm beträgt.

8. Reibrührschweißwerkzeug (1) nach Anspruch 6 oder 7, **dadurch gekennzeichnet, dass** die Lage eine nanostrukturierte Lage aus Aluminiumtitannitrid und Siliciumnitrid oder Aluminiumchromnitrid und Siliciumnitrid ist.

9. Reibrührschweißwerkzeug (1) nach einem der Ansprüche 1 bis 8, **dadurch gekennzeichnet, dass** die äußerste Lage der Beschichtung eine Lage ist, die überwiegend Aluminiumtitannitrid oder Aluminiumchromnitrid enthält.

10. Reibrührschweißwerkzeug (1) nach einem der Ansprüche 1 bis 9, **dadurch gekennzeichnet, dass** der Stift (3) im Wesentlichen zylinderförmig ausgebildet ist.

11. Reibrührschweißwerkzeug (1) nach einem der Ansprüche 1 bis 10, **dadurch gekennzeichnet, dass** der Stift (3) auf einer Achse (X) des Schaftes (2) angeordnet ist.

## Claims

1. A friction stir welding tool (1) with a substantially cylindrical shaft (2), which has at one end (5), proceeding from a shoulder region (4) of the shaft (2), a projecting pin (3) of smaller diameter, wherein the friction stir welding tool (1) at least in the region of the pin (3) and in the shoulder region (4) is of a hard metal containing 80 percent by weight to 98 percent by weight tungsten carbide, **characterized in that** the tungsten carbide is formed with an average grain size of more than 2 µm and up to 20 percent by weight cobalt and optionally a total of up to 18 percent by weight titanium carbide, tantalum carbide, niobium carbide and/or mixed carbides thereof, and the friction stir welding tool (1) has at least in one of the said regions a coating of one or more layers.

2. The friction stir welding tool (1) according to Claim 1, **characterized in that** the hard metal contains 2 percent by weight to 15 percent by weight cobalt.

3. The friction stir welding tool (1) according to Claim 1 or 2, **characterized in that** the hard metal consists of tungsten carbide and 2 percent by weight to 12 percent by weight, preferably 3 percent by weight to 9 percent by weight cobalt.

4. The friction stir welding tool (1) according to one of Claims 1 to 3, **characterized in that** the average grain size of the tungsten carbide is more than 2.5 µm, in particular 2.5 µm to 8.5 µm.

5. The friction stir welding tool (1) according to one of Claims 1 to 4, **characterized in that** the coating is a PVD coating.

6. The friction stir welding tool (1) according to one of Claims 1 to 5, **characterized in that** the coating has at least one layer which contains predominantly aluminium titanium nitride or aluminium chromium nitride.

7. The friction stir welding tool (1) according to Claim 6, **characterized in that** a layer thickness of the layer containing predominantly aluminium titanium nitride or aluminium chromium nitride is 0.5 µm to 8 µm.

8. The friction stir welding tool (1) according to Claim 6 or 7, **characterized in that** the layer is a nanostructured layer of aluminium titanium nitride and silicon nitride or aluminium chromium nitride and silicon nitride.

9. The friction stir welding tool (1) according to one of Claims 1 to 8, **characterized in that** the outermost layer of the coating is a layer which contains predominantly aluminium titanium nitride or aluminium chromium nitride.

10. The friction stir welding tool (1) according to one of Claims 1 to 9, **characterized in that** the pin (3) is constructed substantially in a cylindrical shape.

11. The friction stir welding tool (1) according to one of Claims 1 to 10, **characterized in that** the pin (3) is arranged on an axis (X) of the shaft (2).

## Revendications

1. Outil de soudage par friction-malaxage (1) comprenant une tige (2) essentiellement cylindrique qui présente sur une extrémité (5), une broche (3) de diamètre inférieur faisant saillie depuis une partie d'épaulement (4) de la tige (2), sachant que l'outil de soudage par friction-malaxage (1) est fabriqué, au moins au niveau de la broche (3) et de la partie d'épaulement (4), dans un métal dur contenant 80 % en poids à 98 % en poids de carbure de wolfram, **caractérisé en ce que** le carbure de wolfram est formé avec une taille de grain moyenne de plus de 2 µm et jusqu'à 20 % en poids de cobalt ainsi qu'en option dans la somme, jusqu'à 18 % en poids de carbure de titane, de carbure de tantale, carbure de niobium et/ou de mélange de carbures, et que l'outil de soudage par friction-malaxage (1) présente un revêtement d'une ou plusieurs couche(s) dans au moins l'une des parties nommées.

2. Outil de soudage par friction-malaxage (1) selon la revendication 1, **caractérisé en ce que** le métal dur contient 2 % en poids à 15 % en poids de cobalt.

3. Outil de soudage par friction-malaxage (1) selon la revendication 1 ou 2, **caractérisé en ce que** le métal dur est en carbure de wolfram et 2 % en poids à 12 % en poids, de préférence 3 % en poids à 9 % en poids, de cobalt.

4. Outil de soudage par friction-malaxage (1) selon l'une des revendications 1 à 3, **caractérisé en ce que** la taille de grain moyenne du carbure de wolfram est supérieure à 2,5 µm, fait en particulier de 2,5 µm à 8,5 µm.

5. Outil de soudage par friction-malaxage (1) selon l'une des revendications 1 à 4, **caractérisé en ce que** le revêtement est un revêtement en PVD.

6. Outil de soudage par friction-malaxage (1) selon l'une des revendications 1 à 5, **caractérisé en ce que** le revêtement présente au moins une couche qui contient principalement du nitrure de titane aluminium ou du nitrure de chrome aluminium.

7. Outil de soudage par friction-malaxage (1) selon la revendication 6, **caractérisé en ce qu'**une épaisseur de couche de la couche contenant principalement du nitrure de titane aluminium ou du nitrure de chrome aluminium fait de 0,5 µm à 8 µm.

8. Outil de soudage par friction-malaxage (1) selon la revendication 6 ou 7, **caractérisé en ce que** la couche est une couche nanostructurée de nitrure de titane aluminium et de nitrure de silicium ou de nitrure de chrome aluminium et de nitrure de silicium.

9. Outil de soudage par friction-malaxage (1) selon l'une des revendications 1 à 8, **caractérisé en ce que** la couche la plus extérieure du revêtement est une couche qui contient principalement du nitrure de titane aluminium ou du nitrure de chrome aluminium.

10. Outil de soudage par friction-malaxage (1) selon l'une des revendications 1 à 9, **caractérisé en ce que** la broche (3) est essentiellement cylindrique.

11. Outil de soudage par friction-malaxage (1) selon l'une des revendications 1 à 10, **caractérisé en ce que** la broche (3) est disposée sur un axe (X) de la tige (2).
